# FASCICULE DE BREVET EUROPEEN

(11) **EP 4 009 181 B1**
(45) Date de publication et mention de la délivrance du brevet: **01.03.2023**
(21) Numéro de dépôt: 21210292.5
(22) Date de dépôt: 24.11.2021
(51) Int. Cl.: G06F 13/42, G06F 1/3237

(54) **SYSTEME SUR PUCE ET PROCÉDÉ DE TRANSACTION**
SYSTEM-ON-CHIP UND TRANSAKTIONSVERFAHREN
SYSTEM ON A CHIP AND TRANSACTION METHOD

(30) Priorité: 07.12.2020 FR 2012752
(43) Date de publication de la demande: 08.06.2022
(73) Titulaire: STMicroelectronics (ALPS) SAS, 38000 Grenoble (FR); STMICROELECTRONICS SA, 92120 Montrouge (FR)
(72) Inventeur: SOULIE, Michael, 38850 CHIRENS (FR); MARTIN, Thomas, 38000 GRENOBLE (FR)
(74) Mandataire: Casalonga

(56) Documents cités:
- FR-A1- 2 948 785
- US-A1- 2013 262 939
- US-B1- 9 465 766

## Description

Des modes de réalisation et de mise en oeuvre de l'invention concernent les systèmes sur puce, notamment ceux configurés pour mettre en oeuvre un procédé de gestion de transaction entre un module maître et un module esclave.

Un système sur puce est un système complet embarqué sur une puce pouvant comprendre par exemple un ou plusieurs processeurs, de la mémoire, des périphériques d'interface et/ou d'autres composants nécessaires à la réalisation d'une fonction complexe.

Les systèmes sur puce présentent généralement une architecture hiérarchisée. En particulier, le système sur puce comprend des modules dits « maîtres » et des modules dits « esclaves ». Les modules maîtres émettent des requêtes d'accès en lecture ou en écriture aux modules esclaves.

Par exemple, des modules maîtres sont des modules électroniques tels que des processeurs ou des contrôleurs d'accès direct à la mémoire (connus également sous l'acronyme « DMA », de l'anglais *« Direct Memory Access »).*

Les modules esclaves peuvent être des mémoires de stockage ou des périphériques réseau. Le système sur puces comprend également des horloges à l'aide desquelles les modules esclaves peuvent fonctionner.

Les interconnexions entre des maîtres et des esclaves sont typiquement prises en charge par des bus informatiques internes compatibles avec un ou plusieurs protocoles de communication.

On connaît notamment la famille de protocoles AMBA (acronyme de l'anglais « *Advanced Microcontroller Bus Architecture »*) qui est un standard de communication aujourd'hui largement utilisé, notamment par les systèmes sur puce.

Dans cette famille de protocoles, une transaction entre un module maître et un module esclave comprend une requête d'accès, par le module maître au module esclave, suivie d'une réponse, par le module esclave au module maître.

En particulier, le module maître est programmé pour attendre une réponse du module esclave après avoir émis une requête. L'exécution du code par le module maître peut être suspendue tant que le module maître ne reçoit pas de réponse du module esclave. Si la réponse ne vient pas, l'utilisateur n'a pas d'autre choix que de redémarrer le système sur puce.

Par ailleurs, les systèmes sur puce peuvent être utilisés dans certaines applications nécessitant une faible consommation d'énergie. Par exemple, une faible consommation d'énergie peut être nécessitée pour des systèmes sur puce embarqués dans des objets pouvant être utilisés dans l'Internet des objets (en anglais « Internet of things ») ou bien dans des téléphones portables.

Afin de réduire la consommation d'énergie des systèmes sur puce, une solution connue consiste à désactiver, c'est-à-dire mettre hors tension, les horloges du système sur puce avec lesquels fonctionnent des modules esclaves lorsque ces derniers ne sont pas utilisés. La désactivation et l'activation des horloges est alors contrôlée par programmation logicielle en inscrivant l'état de chaque horloge dans des registres d'un contrôleur d'horloges du système sur puce.

En outre, afin de réduire la consommation d'énergie, il est également possible de mettre hors tension les modules esclaves, notamment en les réinitialisant.

Néanmoins, avec de telles solutions, des erreurs de programmation du module maître peuvent entraîner un risque de blocage du module maître. En particulier, il existe un risque que le module maître soit programmé pour émettre une requête d'accès à un module esclave alors que l'horloge avec laquelle ce module esclave fonctionne est désactivée ou bien alors que le module esclave est hors tension. Il est alors impossible pour le module esclave de générer une réponse à la requête du module maître. L'exécution du code par le module maître est alors bloquée et ne peut plus continuer. L'utilisateur doit alors redémarrer le système sur puce.

Il existe donc un besoin de proposer un système sur puce configuré pour éviter un blocage du module maître lorsqu'une requête d'accès est émise par le module maître à un module esclave alors que l'horloge avec laquelle fonctionne ce module esclave est désactivée, ou bien alors que le module esclave est hors tension.

Selon un aspect, il est proposé un système sur puce comprenant :
- un module maître,
- un module esclave, le module maître étant configuré pour émettre des requêtes d'accès au module esclave,
- une horloge configurée pour cadencer le fonctionnement du module esclave,
- un contrôleur d'horloges configuré pour activer ou désactiver ladite horloge et/ou un contrôleur de mise sous tension configuré pour mettre sous tension ou mettre hors tension le module esclave,

le système comprenant également un système de contrôle configuré pour détecter que l'horloge est désactivée et/ou que le module esclave est hors tension lorsque le module maître émet une requête d'accès au module esclave,
et dans lequel le module maître est configuré pour :
   - activer l'horloge dans le contrôleur d'horloges lorsque le système de contrôle détecte que cette horloge est désactivée et/ou activer la mise sous tension du module esclave dans le contrôleur de mise sous tension lorsque le système de contrôle détecte que le module esclave est hors tension, puis
   - émettre une nouvelle requête d'accès au module esclave.

De préférence, le système sur puce comprend plusieurs modules esclaves et une pluralité d'horloges. Chaque module esclave fonctionne alors à l'aide d'une horloge respective.

Un tel système sur puce permet d'éviter un blocage en attente de réponse du module maître lorsque ce dernier émet une requête d'accès à un module esclave pour lequel l'horloge est désactivée et/ou mis hors tension. En effet, un tel système sur puce est configuré pour activer l'horloge avec laquelle fonctionne le module esclave et/ou mettre sous tension le module esclave si une requête d'accès à ce module esclave a été émise alors que cette horloge était désactivée et/ou alors que ce module esclave est mis hors tension. Le module maître est ensuite configuré pour émettre une nouvelle requête d'accès au module esclave. Ainsi, une réponse correcte du module esclave peut être générée même si une erreur de programmation du module maître a été commise en oubliant d'activer l'horloge avant d'émettre une requête d'accès au module esclave. L'utilisateur n'a alors pas à redémarrer le système sur puce.

Dans un mode de réalisation avantageux, le système de contrôle comprend :
- un dispositif de détection configuré pour détecter si ladite horloge est désactivée lorsque le module maître émet une requête d'accès au module esclave et/ou pour détecter si le module esclave est hors tension,
- un dispositif collecteur configuré pour mémoriser le module esclave pour lequel le module maître a émis une requête d'accès alors que l'horloge avec laquelle fonctionne ce module esclave est désactivée et/ou alors que le module esclave est hors tension.

Lorsque le système sur puce comprend plusieurs modules esclaves, le système de contrôle peut comprendre autant de dispositifs de détection que de modules esclaves. Un dispositif de détection est alors associé à chaque module esclave. En variante, il est possible d'avoir un dispositif de détection pour plusieurs modules esclaves, notamment lorsque ces modules esclaves sont cadencés avec une même horloge et peuvent être mis hors tension, par exemple en les réinitialisant, par un même signal.

Dans un mode de réalisation avantageux, le dispositif collecteur est configuré pour émettre une interruption pour le module maître lorsque le dispositif de détection détecte que l'horloge est désactivée.

De préférence, le module maître est configuré pour accéder au dispositif collecteur après avoir reçu une interruption émise par le dispositif collecteur afin de connaître le module esclave pour lequel une requête d'accès a été émise par le module maître alors que l'horloge avec laquelle ce module esclave fonctionne est désactivée et/ou alors que le module esclave est mis hors tension.

Avantageusement, le module maître est relié au module esclave par un bus.

Dans un mode de réalisation avantageux, le dispositif de détection est configuré pour recevoir les requêtes d'accès du module maître et pour transmettre ces requêtes d'accès au module esclave ainsi que des réponses du module esclave au module maître lorsque l'horloge avec laquelle fonctionne ce module esclave est activée et que le module esclave est mis sous tension. Cela peut être effectué par le dispositif de détection sans ralentir une fréquence utilisée pour la transaction.

En particulier, le dispositif de détection peut être connecté au module maître par l'intermédiaire dudit bus et connecté directement au module esclave.

Avantageusement, le contrôleur d'horloges comprend des registres pour mémoriser un état d'activation de l'horloge et/ou le contrôleur de mise sous tension comprend des registres pour mémoriser un état de mise sous tension du module esclave,
et dans lequel le module maître est configuré pour modifier l'état d'activation de l'horloge dans les registres du contrôleur d'horloges et/ou l'état de mise sous tension du module esclave dans le contrôleur de mise sous tension.

De préférence, le dispositif de détection est configuré pour recevoir l'état d'activation de l'horloge à partir du contrôleur d'horloges et/ou l'état de mise sous tension du module esclave à partir du contrôleur de mise sous tension.

Avantageusement, le dispositif de détection est configuré pour générer et transmettre un message d'erreur au module maître lorsqu'il détecte que l'horloge est désactivée et/ou que le module esclave est hors tension lorsque le module maître émet une requête d'accès au module esclave.

Selon un autre aspect, il est proposé un procédé de gestion de transaction dans un système sur puce entre un module maître et un module esclave, procédé comprenant :
- une émission d'une requête d'accès par le module maître vers le module esclave, le module esclave fonctionnant à l'aide d'une horloge,
- une détection par un système de contrôle d'un état désactivé de l'horloge mémorisé dans un contrôleur d'horloges et/ou d'un état de mise hors tension du module esclave mémorisé dans un contrôleur de mise sous tension,

- une activation de l'horloge dans le contrôleur d'horloges par le module maître si un état désactivé de l'horloge est détecté et/ou une activation de la mise sous tension du module esclave dans le contrôleur de mise sous tension par le module maître si un état de mise hors tension du module esclave est détecté, puis
- une émission d'une nouvelle requête d'accès par le module maître vers le module esclave.

D'autres avantages et caractéristiques de l'invention apparaîtront à l'examen de la description détaillée de modes de mise en oeuvre et de réalisation, nullement limitatifs, et des dessins annexés sur lesquels :
[Fig 1],
[Fig 2],
[Fig 3],
[Fig 4],
[Fig 5],
[Fig 6]
[Fig 7]
[Fig 8]

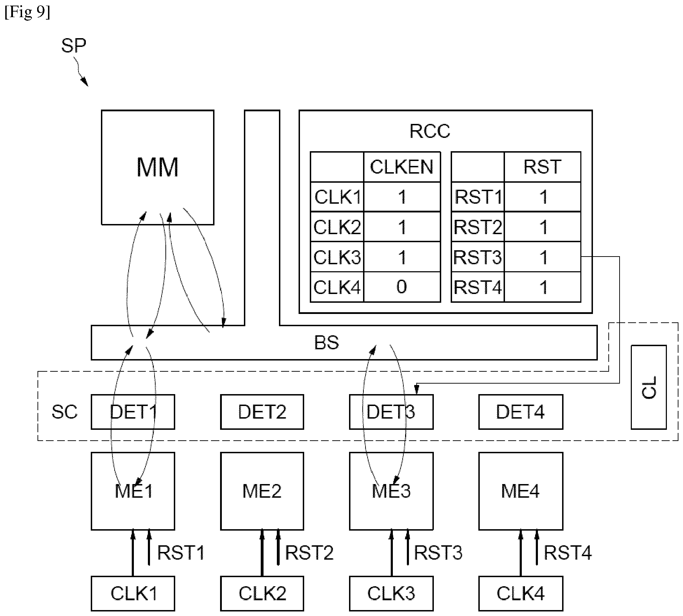

[Fig 9] illustrent schématiquement des modes de réalisation et de mises en oeuvre de l'invention.

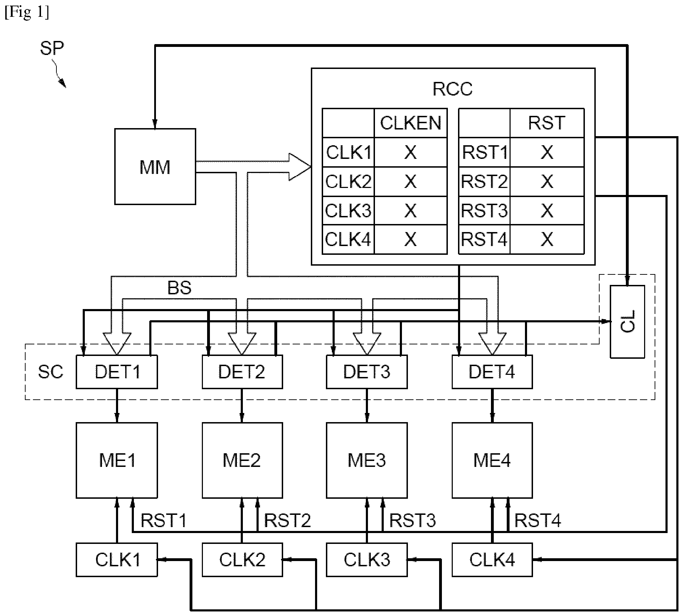

La figure 1 représente un système sur puce SP selon un mode de réalisation de l'invention.

Le système sur puce SP comprend un module maître MM. Le module maître MM peut être un module électronique tel qu'un processeur ou un contrôleur d'accès direct à une mémoire (DMA).

Le système sur puce SP comprend également plusieurs modules esclaves ME1, ME2, ME3 et ME4. Chaque module esclave ME1, ME2, ME3 et ME4 peut être une mémoire de stockage ou un périphérique réseau par exemple. Ici, le système sur puce SP comprend quatre modules esclaves. Néanmoins, il est possible de prévoir des systèmes sur puce selon l'invention présentant un nombre de modules esclaves inférieur ou supérieur à quatre. Un identifiant est associé à chaque module esclave ME1, ME2, ME3 et ME4.

Chaque module esclave comprend en outre une entrée configurée pour recevoir un signal de mise sous tension RST1, RST2, RST3 et RST4. Chaque signal de mise sous tension permet de mettre sous tension ou hors tension le module esclave. L'entrée de chaque module esclave peut être une entrée permettant de réinitialiser le module esclave selon le signal de mise sous tension reçu. Le signe de mise sous tension peut donc être un signal de réinitialisation. En particulier, il est possible de de mettre hors tension un module esclave en maintenant sa réinitialisation.

Le module esclave ME1, ME2, ME3 et ME4 ne peut pas générer de réponses aux requêtes du module maître lorsque le module esclave est mis hors tension.

Le système sur puce SP comprend également un bus BS permettant de connecter chaque module esclave ME1, ME2, ME3 et ME4 au module maître MM.

Le module maître MM est configuré pour pouvoir émettre des requêtes d'accès aux modules esclaves ME1, ME2, ME3 et ME4. Ces requêtes d'accès peuvent être transmises aux modules esclaves ME1, ME2, ME3 et ME4 par le bus informatique BS.

Les modules d'accès sont quant à eux configurés pour générer une réponse aux requêtes d'accès du module maître MM. Ces réponses peuvent être transmises au module maître MM par le bus informatique BS.

Le système sur puce est de préférence compatible avec la famille de protocoles AMBA (acronyme de l'anglais « *Advanced*

### Microcontroller Bus Architecture »).

Le système sur puce comprend également plusieurs horloges CLK1, CLK2, CLK3 et CLK4. Chaque module esclave ME1, ME2, ME3 et ME4 est connecté à une horloge CLK1, CLK2, CLK3 et CLK4 qui lui est associée de façon à cadencer son fonctionnement sur cette horloge. En particulier, chaque horloge CLK1, CLK2, CLK3 et CLK4 permet de cadencer le fonctionnement du module esclave ME1, ME2, ME3 et ME4 qui lui est associé lorsque cette horloge est dans un état activé. En outre, chaque horloge CLK1, CLK2, CLK3 et CLK4 ne permet pas de cadencer le fonctionnement du module esclave ME1, ME2, ME3 et ME4 qui lui est associé lorsque cette horloge est dans un état désactivé. Le module esclave ME1, ME2, ME3 et ME4 ne peut alors pas générer de réponses aux requêtes du module maître.

Le système sur puce SP comprend également un contrôleur d'horloges et de mise sous tension RCC. Le contrôleur RCC comprend une pluralité de registres représentés à la figure 1 sous forme de table. Les registres du contrôleur RCC sont configurés pour mémoriser l'état CLKEN de chaque horloge CLK1, CLK2, CLK3 et CLK4 associée à un module esclave ME1, ME2, ME3 et ME4. Les registres du contrôleur RCC sont également configurés pour mémoriser l'état RST de chaque signal de mise sous tension RST1, RST2, RST3 et RST4 associé à chaque module esclave.

Ici, le système comprend un unique contrôleur RCC utilisé pour mémoriser l'état des horloges ainsi que l'état de mise sous tension des modules esclaves. En variante, il est possible de prévoir un premier contrôleur utilisé pour mémoriser uniquement l'état des horloges, et un deuxième contrôleur utilisé pour mémoriser uniquement l'état de mise sous tension des modules esclaves.

Par ailleurs, le module maître MM est configuré pour écrire et modifier l'état CLKEN de chaque horloge CLK1, CLK2, CLK3, CLK4 dans les registres du contrôleur RCC et pour écrire et modifier l'état RST de chaque signal de mise sous tension RST1, RST2, RST3 et RST4 dans les registres du contrôleur RCC.

Le système sur puce SP comprend également un système de contrôle SC. Le système de contrôle SC est utilisé pour prévenir un blocage du module maître MM en cas de requête d'accès émise à un module esclave ME1, ME2, ME3 et ME4 lorsque l'horloge avec laquelle fonctionne ce module esclave ME1, ME2, ME3 et ME4 est désactivée et/ou lorsque le module esclave est hors tension.

En particulier, le système de contrôle SC est utilisé pour prévenir un blocage du module maître MM résultant d'une erreur de programmation du module maître MM. Plus particulièrement, cette erreur de programmation consiste à émettre des requêtes d'accès à des modules esclaves pour lesquels les horloges associées à ces modules esclaves sont désactivées et/ou à des modules esclaves hors tension. En effet, le module maître MM attend une réponse pour chaque requête d'accès émise. Si aucune réponse ne lui parvient du fait que l'horloge associée au module esclave visé par la requête d'accès est désactivée et/ou que le module esclave est hors tension, le module maître MM ne pourra avancer dans l'exécution de son code. Le module maître MM serait alors bloqué.

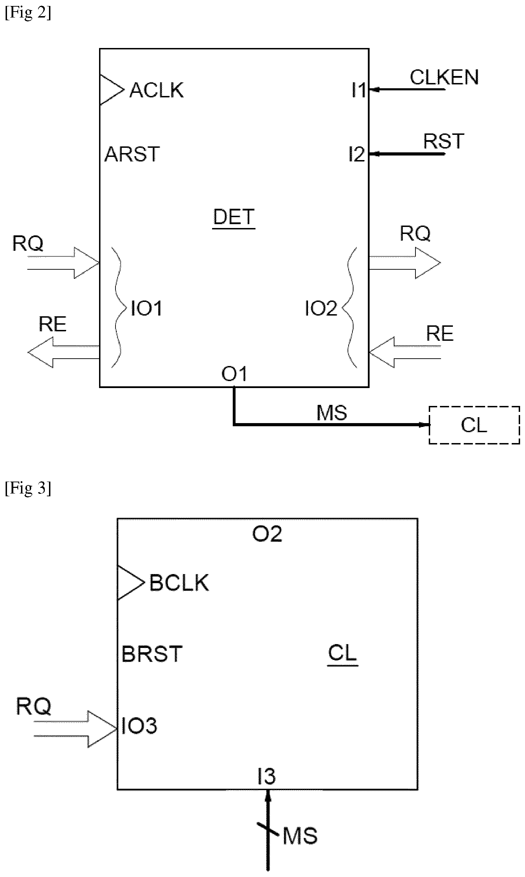

Plus particulièrement, le système de contrôle SC comprend plusieurs dispositifs de détection DET1, DET2, DET3 et DET4 associés respectivement aux modules esclaves ME1, ME2, ME3 et ME4. Les dispositifs de détection DET1, DET2, DET3 et DET4 sont interposés respectivement entre les modules esclaves ME1, ME2, ME3 et ME4 et le module maître MM. Un tel dispositif de détection est représenté schématiquement à la figure 2.

Plus particulièrement, chaque dispositif de détection DET1, DET2, DET3 et DET4 comprend une première entrée/sortie IO1 connectée au bus informatique BS. Cette première entrée/sortie est configurée pour recevoir les requêtes d'accès RQ du module maître MM destinées au module esclave associé au dispositif de détection et pour transmettre les réponses RE de ce module esclave au module maître.

Chaque dispositif de détection DET1, DET2, DET3 et DET4 comprend également une deuxième entrée/sortie 102 connectée au module esclave associé à ce dispositif de détection. Cette deuxième entrée/sortie est configurée pour transmettre les requêtes d'accès RQ du module maître MM au module esclave associé au dispositif de détection et pour recevoir les réponses RE de ce module esclave aux requêtes d'accès du module maître.

Chaque dispositif de détection DET1, DET2, DET3 et DET4 comprend également une entrée I1 connectée au contrôleur RCC de façon à recevoir l'état CLKEN de l'horloge associée au module esclave auquel le dispositif de détection est associé.

Chaque dispositif de détection DET1, DET2, DET3 et DET4 comprend également une entrée I2 connectée au contrôleur d'horloges et de mise sous tension RCC de façon à recevoir l'état RST du module esclave auquel le dispositif de détection est associé.

Chaque dispositif de détection DET1, DET2, DET3 et DET4 comprend également une entrée ACLK configurée pour recevoir un signal d'horloge permettant de cadencer le fonctionnement de ce dispositif de détection et une entrée ARST configurée pour recevoir un signal de réinitialisation pour réinitialiser ce dispositif de détection.

Chaque dispositif de détection comprend en outre une sortie O1.

Chaque dispositif de détection est configuré pour détecter si l'horloge associée au module esclave associé à ce dispositif de détection est désactivée lorsque le module maître émet une requête d'accès à ce module esclave. En particulier, l'état désactivée de l'horloge mémorisé dans un registre du contrôleur RCC est transmis au dispositif de détection de sorte que le dispositif de détection peut savoir si l'horloge est désactivée lorsque le module maître émet une requête d'accès.

Chaque dispositif de détection est également configuré pour détecter si le module esclave associé à ce dispositif de détection est hors tension lorsque le module maître émet une requête d'accès à ce module esclave. En particulier, l'état de mise hors tension du module esclave mémorisé dans un registre du contrôleur RCC est transmis au dispositif de détection de sorte que le dispositif de détection peut savoir si le module esclave est hors tension lorsque le module maître émet une requête d'accès.

En outre, chaque dispositif de détection DET1, DET2, DET3 et DET4 est configuré pour générer un message d'erreur qui est ensuite transmis au module maître par la première entrée/sortie IO1 lorsque le dispositif de détection détecte que l'horloge est désactivée et/ou que le module esclave est hors tension lorsque le module maître émet une requête d'accès au module esclave. Le message d'erreur permet d'éviter que le module maître soit bloqué en attendant une réponse du module esclave alors que l'horloge associée à ce module esclave est désactivée et/ou que le module esclave est hors tension.

Par ailleurs, chaque dispositif de détection DET1, DET2, DET3 et DET4 est configuré pour signaler à un dispositif collecteur CL du système de contrôle SC qu'une requête d'accès au module esclave associé à ce dispositif de détection a été émise alors que l'horloge associée à ce module esclave était désactivée et/ou que le module esclave était hors tension. Pour ce faire, chaque dispositif de détection est configuré pour émettre un message de signalement MS par l'intermédiaire de sa sortie O1 reliée directement au dispositif collecteur CL.

Le système de contrôle SC comprend également un dispositif collecteur CL représenté schématiquement à la figure 3.

Le dispositif collecteur CL comprend une entrée/sortie 103 connectée au bus informatique BS.

Le dispositif collecteur CL comprend également une entrée BCLK configurée pour recevoir un signal d'horloge permettant de cadencer le fonctionnement de ce dispositif collecteur et une entrée BRST configurée pour recevoir un signal de réinitialisation pour réinitialiser ce dispositif collecteur.

Le dispositif collecteur CL comprend en outre au moins une entrée I3 connectée à la sortie O1 des dispositifs de détection de façon à recevoir les messages de signalement MS.

Le dispositif collecteur CL comprend également une sortie 02 connectée au module maître MM.

Le dispositif collecteur CL comprend également plusieurs registres.

Le dispositif collecteur CL est configuré pour mémoriser dans ses registres les modules esclaves pour lesquels le module maître a émis une requête d'accès alors que les horloges avec lesquelles fonctionnent ces modules esclaves sont désactivées et/ou alors que ces modules esclaves sont hors tension.

Plus particulièrement, lorsque le dispositif collecteur CL reçoit un message de signalement d'un dispositif détecteur, le dispositif collecteur CL est configuré pour mémoriser dans ses registres l'identifiant du module esclave associé à ce dispositif détecteur.

En outre, le dispositif collecteur CL est également configuré pour générer une interruption lorsqu'il reçoit un message de signalement d'un dispositif de détection de façon à alerter le module maître MM. L'interruption est émise par la sortie O2.

Ainsi, le module maître MM est configuré pour recevoir les interruptions générées par le dispositif collecteur CL.

Une fois l'interruption du dispositif collecteur CL reçu par le module maître MM, le module maître MM est configuré pour lire les registres du dispositif collecteur de façon à connaître le module esclave pour lequel une requête d'accès a été destinée alors que l'horloge avec laquelle ce module esclave fonctionne est désactivée et/ou alors que ce module esclave est hors tension.

Le module maître MM est également configuré pour modifier l'état de chaque horloge et/ou pour modifier les états de mise sous tension dans les registres du contrôleur RCC.

Le module maître MM est configuré pour renouveler sa requête d'accès au module esclave une fois que l'horloge avec laquelle ce module esclave a été activée et que le module esclave est mis sous tension.

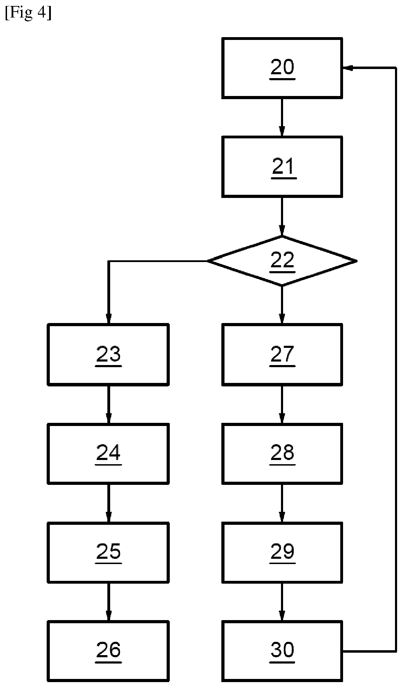

La figure 4 représente un procédé de gestion de transaction entre un module maître et un module esclave.

À l'étape 20, le module maître émet une requête d'accès vers le module esclave.

À l'étape 21, le dispositif de détection associé à ce module esclave reçoit la requête d'accès du module maître.

À l'étape 22, le dispositif de détection détecte si l'horloge associée au module esclave est activée ou désactivée et/ou si le module esclave est sous tension ou bien hors tension.

En particulier, le dispositif de détection récupère dans les registres du contrôleur RCC l'état de l'horloge associée au module esclave ainsi que l'état de mise sous tension associé à ce module esclave.

Si le dispositif de détection détecte que cette horloge est activée et que le module esclave est sous tension, le dispositif de détection transmet la requête d'accès au module esclave à l'étape 23.

À l'étape 24, le module esclave reçoit la requête d'accès et génère une réponse qu'il transmet au dispositif de détection.

À l'étape 25, le dispositif de détection reçoit la réponse du module esclave et la transmet au module maître.

À l'étape 26, le module maître reçoit la réponse du module esclave et la transaction se termine.

Par ailleurs, si le dispositif de détection détecte, à l'étape 22, que l'horloge est désactivée et/ou que le module esclave est hors tension, alors le procédé de gestion de transaction comprend une étape 27. Dans cette étape 27, le dispositif de détection génère un message d'erreur qu'il transmet au module maître. Le dispositif de détection génère également un message de signalement qu'il transmet au dispositif collecteur.

Ensuite à l'étape 28, le dispositif collecteur reçoit le message de signalement du dispositif de détection et mémorise l'identifiant du module esclave. En outre, le dispositif collecteur génère une interruption qu'il transmet au module maître.

Lorsque le module maître reçoit l'interruption à l'étape 29, le module maître accède alors aux registres du dispositif collecteur pour identifier le module esclave pour lequel une requête d'accès a été émise alors que l'horloge associée à ce module esclave était désactivée et/ou alors que ce module esclave était hors tension.

Une fois le module esclave identifié, à l'étape 30, le module maître active l'horloge associée au module esclave et/ou active la mise sous tension du module esclave dans le contrôleur d'horloge et de mise sous tension.

Comme l'horloge associée au module esclave est alors activée et comme le module esclave est mis sous tension, le module maître peut de nouveau requérir un accès à ce module esclave en étant assuré de recevoir une réponse correcte de ce module esclave.

Ainsi, le procédé de gestion de transaction peut alors recommencer à l'étape 20 dans laquelle le module maître émet une nouvelle requête d'accès vers le module esclave.

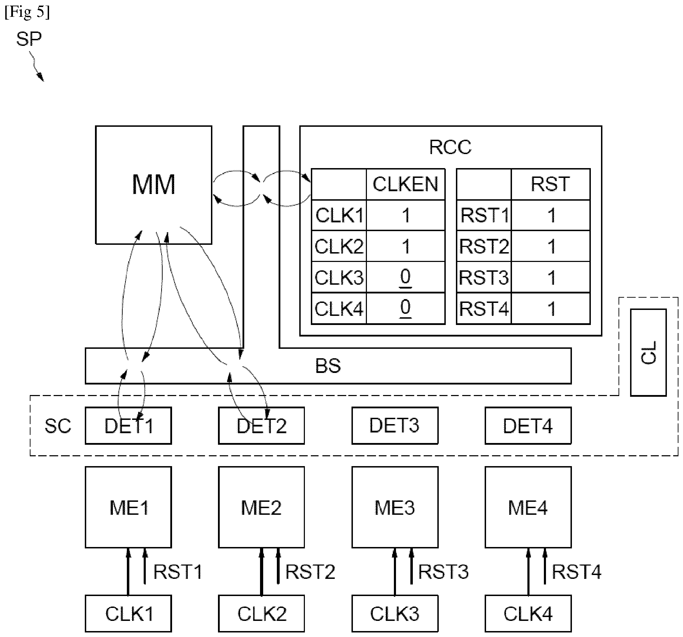

Les figures 5 à 9 représentent un exemple de mise en oeuvre de procédés de gestion de transaction par le système sur puce représenté à la figure 1.

Dans cet exemple, les horloges sont initialement activées et les modules esclaves sont mis sous tension. La valeur des registres concernant l'état de chaque horloge du contrôleur RCC est donc à 1 pour chaque horloge pour indiquer que ces horloges sont activées. De même, la valeur des registres concernant l'état de mise sous tension des modules esclaves du contrôleur RCC est donc à 1 pour chaque module esclave pour indiquer que ces modules esclaves sont sous tension.

À la figure 5, le module maître désactive les horloges CLK3 et CLK4 associées aux modules ME3 et ME4 dans les registres du contrôleur d'horloges afin de réduire la consommation d'énergie du système sur puce. La valeur des registres du contrôleur RCC relatifs aux horloges CLK3 et CLK4 associées aux modules ME3 et ME4 passe donc à 0 pour indiquer que ces horloges sont désactivées.

Par ailleurs, le module maître MM émet une demande d'accès au module esclave ME1 pour récupérer des données du module esclave ME1. Comme l'horloge CLK1 associée au module esclave ME1 est activée et que le module esclave ME1 est mis sous tension, le module maître MM reçoit les données du module esclave ME1. Les données peuvent par exemple être des données utiles ou bien des instructions.

Le module maître MM effectue ensuite un calcul en utilisant ces données puis émet une autre demande d'accès au module esclave ME2 pour écrire le résultat dans le module esclave ME2. Comme l'horloge CLK2 associée au module esclave ME2 est activée et que le module esclave ME2 est mis sous tension, les données peuvent être écrites dans le module esclave ME2.

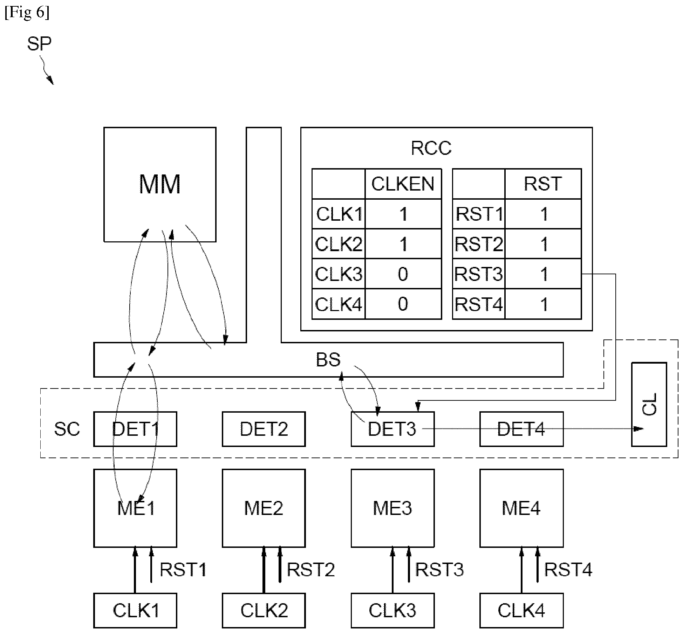

Ensuite, le module maître MM souhaite effectuer un calcul à partir de données enregistrées dans les modules esclaves ME1 et ME3. Ainsi, comme représenté à la figure 6, le module maître MM émet une requête d'accès au module esclave ME1 pour récupérer des données de ce module esclave ME1. Comme l'horloge CLK1 associée au module esclave ME1 est activée et que le module esclave ME1 est mis sous tension, le module maître MM reçoit les données du module esclave ME1.

Par ailleurs, le module maître MM émet une requête d'accès au module esclave ME3 pour récupérer des données de ce module esclave ME3. Néanmoins, une erreur de programmation a été commise et l'horloge CLK3 associée au module esclave ME3 n'a pas été réactivée avant l'émission de la requête d'accès au module esclave ME3. Le module esclave ME3 ne peut donc pas transmettre les données au module maître en réponse à la requête d'accès. Le module maître MM est bloquée en attente d'une réponse à sa requête d'accès.

Le dispositif de détection DET3 détecte alors que la requête d'accès au module esclave ME3 a été émise alors que l'horloge CLK3 associée au module esclave ME3 était désactivée. En particulier, le dispositif de détection DET3 connaît l'état CLKEN de cette horloge CLK3 en le récupérant d'un registre du contrôleur d'horloges associé à cette horloge.

Le dispositif de détection DET3 émet alors un message d'erreur au module maître MM en réponse à la requête d'accès de façon à débloquer le module maître MM.

Le dispositif collecteur CL enregistre dans un registre l'identifiant du module esclave ME3.

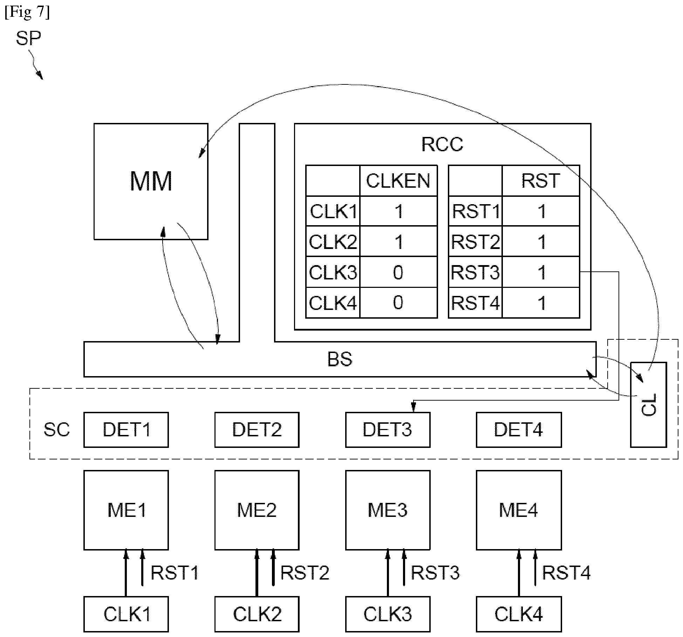

Ensuite, comme représenté à la figure 7, le dispositif collecteur CL émet une interruption au module maître. Le module maître MM lit alors les registres du dispositif collecteur CL pour identifier le module esclave pour lequel une requête d'accès a été émise alors que l'horloge associée à ce module esclave était désactivée. Le module maître récupère donc l'identifiant du module esclave ME3 depuis le dispositif collecteur.

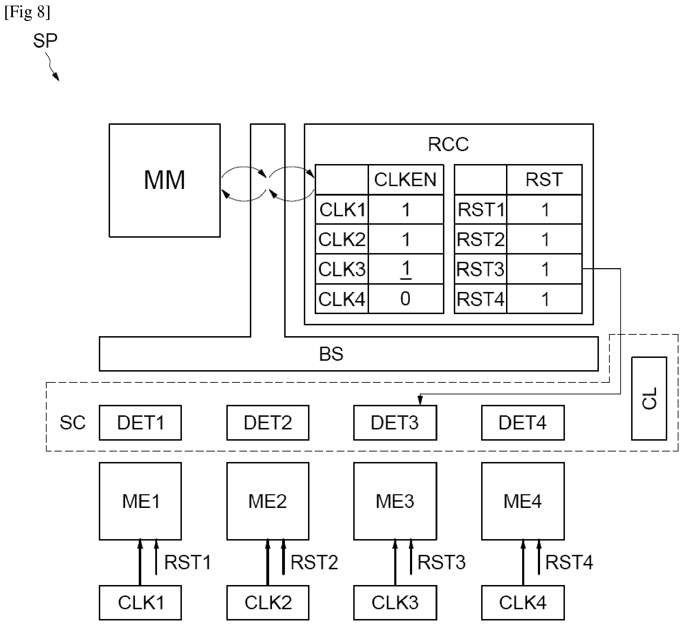

Puis, comme représenté à la figure 8, le module maître MM active l'horloge CLK3 associée au module esclave ME3 dans le contrôleur RCC. La valeur du registre concernant cette horloge passe alors à 1 pour indiquer que l'horloge est active.

Ensuite, comme l'horloge CLK3 associée au module esclave ME3 et l'horloge CLK1 associée au module esclave ME1 sont activées et que les modules esclaves ME1 et ME3 sont sous tension, le module maître peut de nouveau requérir un accès à ces deux modules esclaves ME1 et ME3 pour effectuer le calcul souhaité en étant assuré de recevoir une réponse correcte de ces deux modules esclaves.

Ainsi, comme représenté à la figure 9, le module maître émet une requête d'accès au module esclave ME1 pour récupérer des données de ce module esclave ME1. Comme l'horloge CLK1 associée au module esclave ME1 est activée et que le module esclave ME1 est mis sous tension, le module maître MM reçoit les données du module esclave ME1.

En outre, le module maître émet une requête d'accès au module esclave ME3 pour récupérer des données de ce module esclave ME3. Comme l'horloge CLK3 associée au module esclave ME3 est activée et que le module esclave ME3 est mis sous tension, le module maître MM reçoit les données du module esclave ME3.

Le module maître peut alors effectuer le calcul souhaité à partir des données récupérées dans le module esclave ME1 et dans le module esclave ME3.

Il est aussi possible d'avoir un dispositif de détection pour plusieurs modules esclaves, notamment lorsque ces modules esclaves sont cadencés avec une même horloge et peuvent être mis ensemble hors tension, par exemple en les réinitialisant par un même signal de réinitialisation.

## Revendications

1. Système sur puce comprenant :
- un module maître (MM),
- un module esclave (ME1, ME2, ME3, ME4), le module maître étant configuré pour émettre des requêtes d'accès au module esclave,
- une horloge (CLK1, CLK2, CLK3, CLK4) configurée pour cadencer le fonctionnement du module esclave,
- un contrôleur d'horloges (RCC) configuré pour activer ou désactiver ladite horloge et/ou un contrôleur de mise sous tension (RCC) configuré pour mettre sous tension ou mettre hors tension le module esclave,
le système comprenant également un système de contrôle (SC) configuré pour détecter que l'horloge est désactivée et/ou que le module esclave est hors tension lorsque le module maître émet une requête d'accès au module esclave,
et le système est **caractérisé en ce que** le module maître est configuré pour :
- activer l'horloge dans le contrôleur d'horloges lorsque le système de contrôle détecte que cette horloge est désactivée et/ou activer la mise sous tension du module esclave dans le contrôleur de mise sous tension lorsque le système de contrôle détecte que le module esclave est hors tension, puis
- émettre une nouvelle requête d'accès au module esclave.

2. Système selon la revendication 1, dans lequel le système de contrôle comprend :
- un dispositif de détection (DET1, DET2, DET3, DET4) configuré pour détecter si ladite horloge est désactivée lorsque le module maître émet une requête d'accès au module esclave et/ou pour détecter si le module esclave est hors tension,
- un dispositif collecteur (CL) configuré pour mémoriser le module esclave pour lequel le module maître a émis une requête d'accès alors que l'horloge avec laquelle fonctionne ce module esclave est désactivée et/ou alors que le module esclave est hors tension.

3. Système selon la revendication 2, dans lequel le dispositif collecteur (CL) est configuré pour émettre une interruption pour le module maître lorsque le dispositif de détection détecte que l'horloge est désactivée.

4. Système selon la revendication 3, dans lequel le module maître (MM) est configuré pour accéder au dispositif collecteur après avoir reçu une interruption émise par le dispositif collecteur afin de connaître le module esclave pour lequel une requête d'accès a été émise par le module maître alors que l'horloge avec laquelle ce module esclave fonctionne est désactivée et/ou alors que le module esclave est mis hors tension.

5. Système selon l'une des revendications 1 à 4, dans lequel le module maître (MM) est relié au module esclave par un bus informatique.

6. Système selon l'une des revendications 2 à 5, dans lequel le dispositif de détection (DET1, DET2, DET3, DET4) est configuré pour recevoir les requêtes d'accès du module maître et pour transmettre ces requêtes d'accès au module esclave ainsi que des réponses du module esclave au module maître lorsque l'horloge avec laquelle fonctionne ce module esclave est activée et que le module esclave est mis sous tension.

7. Système selon l'une des revendications 1 à 6, dans lequel le contrôleur d'horloges (RCC) comprend des registres pour mémoriser un état d'activation de chaque horloge et/ou le contrôleur de mise sous tension comprend des registres pour mémoriser un état de mise sous tension du module esclave,
et dans lequel le module maître est configuré pour modifier l'état d'activation de l'horloge dans les registres du contrôleur d'horloges et/ou un état de mise sous tension du module esclave dans le contrôleur de mise sous tension.

8. Système selon l'une des revendications 2 à 6 et la revendication 7, dans lequel le dispositif de détection (DET1, DET2, DET3, DET4) est configuré pour recevoir l'état d'activation de l'horloge à partir du contrôleur d'horloges (RCC) et/ou l'état de mise sous tension du module esclave à partir du contrôleur de mise sous tension.

9. Système selon l'une des revendications 1 à 8 dans lequel le dispositif de détection (DET1, DET2, DET3, DET4) est configuré pour générer et transmettre un message d'erreur au module maître lorsqu'il détecte que l'horloge est désactivée et/ou que le module esclave est hors tension lorsque le module maître émet une requête d'accès au module esclave.

10. Procédé de gestion de transaction dans un système sur puce entre un module maître (MM) et un module esclave (ME1, ME2, ME3, ME4), dont le fonctionnement est cadencé par une horloge (CLK1, CLK2, CLK3, CLK4), procédé comprenant :
- une émission d'une requête d'accès par le module maître vers le module esclave,
- une détection par un système de contrôle (SC) d'un état désactivé de l'horloge mémorisé dans un contrôleur d'horloges (RCC) et/ou d'un état de mise hors tension du module esclave mémorisé dans un contrôleur de mise sous tension, le procédé est **caractérisé par**
- une activation de l'horloge dans le contrôleur d'horloges par le module maître (MM) si un état désactivé de l'horloge est détecté et/ou une activation de la mise sous tension du module esclave dans le contrôleur de mise sous tension par le module maître si un état de mise hors tension du module esclave est détecté, puis
- une émission d'une nouvelle requête d'accès par le module maître (MM) vers le module esclave (ME1, ME2, ME3, ME4).

## Patentansprüche

1. On-Chip-System, umfassend:
- ein Mastermodul (MM),
- ein Slavemodul (ME1, ME2, ME3, ME4), wobei das Mastermodul so konfiguriert ist, dass es Zugriffsanfragen an das Slavemodul sendet,
- eine Uhr (CLK1, CLK2, CLK3, CLK4), die so konfiguriert ist, dass sie den Betrieb des Slavemoduls taktet.
- eine Uhr-Steuerung (RCC), die so konfiguriert ist, dass sie die Uhr aktiviert oder deaktiviert, und/oder eine Einschaltsteuerung (RCC), die so konfiguriert ist, dass sie das Slavemodul einschaltet oder ausschaltet, wobei das System auch ein Steuersystem (SC) umfasst, das so konfiguriert ist, dass es erkennt, dass die Uhr deaktiviert ist und/oder dass das Slavemodul ausgeschaltet ist, wenn das Mastermodul eine Zugriffsanfrage an das Slavemodul sendet,
und wobei das System **dadurch gekennzeichnet ist, dass** das Mastermodul konfiguriert ist, zum:
- Aktivieren der Uhr in der Uhr-Steuerung, wenn das Kontrollsystem feststellt, dass diese Uhr deaktiviert ist, und/oder das Aktivieren des Einschaltens des Slavemoduls in der Einschaltsteuerung, wenn das Kontrollsystem feststellt, dass das Slavemodul ausgeschaltet ist, dann
- Senden einer neuen Zugriffsanfrage an das Slavemodul.

2. System nach Anspruch 1, wobei das Kontrollsystem Folgendes umfasst:
- eine Erkennungsvorrichtung (DET1, DET2, DET3, DET4), die so konfiguriert ist, dass sie erkennt, ob die Uhr deaktiviert ist, wenn das Mastermodul eine Zugriffsanfrage an das Slavemodul sendet, und/oder erkennt, ob das Slavemodul ausgeschaltet ist,
- eine Sammelvorrichtung (CL), die so konfiguriert ist, dass sie das Slavemodul speichert, für das das Mastermodul eine Zugriffsanfrage gestellt hat, während die Uhr, mit der dieses Slavemodul arbeitet, deaktiviert ist und/oder während das Slavemodul ausgeschaltet ist.

3. System nach Anspruch 2, wobei die Sammelvorrichtung (CL) so konfiguriert ist, dass sie eine Unterbrechung für das Mastermodul ausgibt, wenn die Erkennungsvorrichtung feststellt, dass die Uhr deaktiviert ist.

4. System nach Anspruch 3, bei dem das Mastermodul (MM) so konfiguriert ist, dass es auf die Sammelvorrichtung zugreift, nachdem es eine Unterbrechung empfangen hat, die von der Sammelvorrichtung gesendet wurde, um das Slavemodul zu kennen, für das eine Zugriffsanfrage vom Mastermodul gesendet wurde, während die Uhr, mit der dieses Slavemodul arbeitet, deaktiviert ist und/oder während das Slavemodul ausgeschaltet ist.

5. System nach einem der Ansprüche 1 bis 4, wobei das Mastermodul (MM) über einen Computerbus mit dem Slavemodul verbunden ist.

6. System nach einem der Ansprüche 2 bis 5, wobei die Erkennungsvorrichtung (DET1, DET2, DET3, DET4) so konfiguriert ist, dass sie Zugriffsanfragen vom Mastermodul empfängt und diese Zugriffsanfragen an das Slavemodul sowie Antworten vom Slavemodul an das Mastermodul weiterleitet, wenn die Uhr, mit der dieses Slavemodul arbeitet, aktiviert wird und das Slavemodul eingeschaltet wird.

7. System nach einem der Ansprüche 1 bis 6, wobei die Uhr-Steuerung (RCC) Register zum Speichern eines Aktivierungszustands jeder Uhr umfasst und/oder die Einschaltsteuerung Register zum Speichern eines Einschaltstatus des Slavemoduls umfasst,
und wobei das Mastermodul so konfiguriert ist, dass es den Aktivierungszustand der Uhr in den Registern der Uhr-Steuerung und/oder einen Einschaltzustand des Slavemoduls in der Einschaltsteuerung ändert.

8. System nach einem der Ansprüche 2 bis 6 und Anspruch 7, wobei die Erkennungsvorrichtung (DET1, DET2, DET3, DET4) so konfiguriert ist, dass sie den Aktivierungsstatus der Uhr von der Uhr-Steuerung (RCC) und/oder den Einschaltstatus des Slavemoduls von der Einschaltsteuerung empfängt.

9. System nach einem der Ansprüche 1 bis 8, wobei die Erkennungsvorrichtung (DET1, DET2, DET3, DET4) so konfiguriert ist, dass sie eine Fehlermeldung erzeugt und an das Mastermodul überträgt, wenn sie erkennt, dass die Uhr deaktiviert ist und/oder dass das Slavemodul ausgeschaltet ist, wenn das Mastermodul eine Zugriffsanfrage an das Slavemodul sendet.

10. Verfahren zur Verwaltung einer Transaktion in einem System auf einem Chip zwischen einem Mastermodul (MM) und einem Slavemodul (ME1, ME2, ME3, ME4), dessen Betrieb durch eine Uhr (CLK1, CLK2, CLK3, CLK4) getaktet wird, wobei das Verfahren Folgendes umfasst:
- ein Senden einer Zugriffsanfrage vom Mastermodul an das Slavemodul,
- ein Erkennen durch ein Steuersystem (SC) eines in einer Uhr-Steuerung (RCC) gespeicherten deaktivierten Zustands der Uhr und/oder eines in einer Einschaltsteuerung gespeicherten Ausschaltzustands des Slavemoduls, wobei das Verfahren **gekennzeichnet ist durch**
- eine Aktivierung der Uhr in der Uhr-Steuerung durch das Mastermodul (MM), wenn ein deaktivierter Zustand der Uhr erkannt wird, und/oder eine Aktivierung des Einschaltens des Slavemoduls in der Einschaltsteuerung durch das Mastermodul, wenn ein ausgeschalteter Zustand des Slavemoduls erkannt wird, dann
- eine Ausgabe einer neuen Zugriffsanfrage durch das Mastermodul (MM) an das Slavemodul (ME1, ME2, ME3, ME4).

## Claims

1. A system-on-chip comprising:
- a master module (MM),
- a slave module (ME1, ME2, ME3, ME4), the master module being configured to emit access requests to the slave module,
- a clock (CLK1, CLK2, CLK3, CLK4) configured to clock the operation of the slave module,
- a clock controller (RCC) configured to activate or deactivate said clock and/or a power-on controller (RCC) configured to power on or power off the slave module,
the system also comprising a control system (SC) configured to detect that the clock is deactivated and/or
that the slave module is powered off when the master module emits an access request to the slave module,
and the system is **characterised in that** the master module is configured to:
- activate the clock in the clock controller when the control system detects that this clock is deactivated and/or activate the power on of the slave module in the power-on controller when the control system detects that the slave module is powered off, then
- emit a new access request to the slave module.

2. The system according to claim 1, wherein the control system comprises:
- a detection device (DET1, DET2, DET3, DET4) configured to detect whether said clock is deactivated when the master module emits an access request to the slave module and/or to detect whether the slave module is powered off,
- a collector device (CL) configured to memorise the slave module for which the master module has emitted an access request while the clock with which this slave module operates is deactivated and/or while the slave module is powered off.

3. The system according to claim 2, wherein the collector device (CL) is configured to emit an interruption for the master module when the detection device detects that the clock is deactivated.

4. The system according to claim 3, wherein the master module (MM) is configured to access the collector device after having received an interruption emitted by the collector device in order to know the slave module for which an access request has been emitted by the master module while the clock with which this slave module operates is deactivated and/or while the slave module is powered off.

5. The system according to one of claims 1 to 4, wherein the master module (MM) is connected to the slave module via a computer bus.

6. The system according to one of claims 2 to 5, wherein the detection device (DET1, DET2, DET3, DET4) is configured to receive the access requests from the master module and to transmit these access requests to the slave module as well as responses of the slave module to the master module when the clock with which this slave module operates is activated and the slave module is powered on.

7. The system according to one of claims 1 to 6, wherein the clock controller (RCC) comprises registers for memorising an activation state of each clock and/or the power-on controller comprises registers for memorising a power-on state of the slave module,
and wherein the master module is configured to modify the activation state of the clock in the registers of the clock controller and/or a power-on state of the slave module in the power-on controller.

8. The system according to one of claims 2 to 6 and claim 7, wherein the detection device (DET1, DET2, DET3, DET4) is configured to receive the activation state of the clock from the clock controller (RCC) and/or the power-on state of the slave module from the power-on controller.

9. The system according to one of claims 1 to 8, wherein the detection device (DET1, DET2, DET3, DET4) is configured to generate and transmit an error message to the master module when it detects that the clock is deactivated and/or that the slave module is powered off when the master module emits an access request to the slave module.

10. A method for managing a transaction in a system-on-chip between a master module (MM) and a slave module (ME1, ME2, ME3, ME4), whose operation is clocked by a clock (CLK1, CLK2, CLK3, CLK4), the method comprising:
- an emission of an access request by the master module to the slave module,
- a detection by a control system (SC) of a deactivated state of the clock memorised in a clock controller (RCC) and/or of a power-off state of the slave module memorised in a power-on controller,
the method is **characterised by**
- an activation of the clock in the clock controller by the master module (MM) if a deactivated state of the clock is detected and/or an activation of the power on of the slave module in the power-on controller by the master module if a power-off state of the slave module is detected, then
- an emission of a new access request by the master module (MM) to the slave module (ME1, ME2, ME3, ME4).
